# EUROPEAN PATENT APPLICATION

(11) **EP 1 685 989 A2**
(43) Date of publication of application: **02.08.2006**
(21) Application number: 06000073.4
(22) Date of filing: 03.01.2006
(51) Int. Cl.: B60H 1/00

(54) **Airflow distribution structure of vehicular air conditioning system**

(30) Priority: 26.01.2005 JP 2005018493; 26.01.2005 JP 2005018501
(71) Applicant: Calsonic Kansei Corporation, Tokyo 164-8602 (JP)
(72) Inventor: Ozeki, Yukio, Nakano-ku Tokyo 164-8602 (JP)
(74) Representative: Grünecker, Kinkeldey, Stockmair & Schwanhäusser Anwaltssozietät

(57) **Abstract**

The airflow distribution structure of a vehicular air conditioning system includes a tubular strength member (1) extending behind an instrument panel in a width direction of a vehicle and having both ends fixed to opposite side walls inside a passenger room, respectively. The strength member includes a first portion having an airflow passage therein. The strength member includes a second portion having a first outlet communicating with the airflow passage. The second portion is enlarged to be greater in tube dimension than the first portion.

## Description

### CROSS-REFERENCE TO RELATED APPLICATIONS

This application is based upon and claims the benefit of priority from Japanese Patent Applications No. 2005-018493 and No. 2005-018501 each filed on January 16, 2005; the entire contents of which are incorporated herein by reference.

### BACKGROUND OF THE INVENTION

The invention relates to an airflow distribution structure of a vehicular air conditioning system, and more particularly, to an airflow distribution structure for distributing conditioned air into the passenger room using a cross car beam.

A cross car beam is positioned proximate to the boundary between an engine room and a passenger room in an automobile such that the cross car beam extends across a vehicle body. The cross car beam extends between both side surfaces of the vehicle body, and the opposite ends of the cross car beam are connected to the opposite inner side surfaces of the vehicle body. This structure reinforces rigidity of the vehicle body in the transverse direction, and receives an impact applied at the time of side collision. The document, Japanese Patent Application Publication Laid-open No. H10-44762, describes a structure in which such a cross car beam is used as a duct of conditioned air from an air conditioning unit.

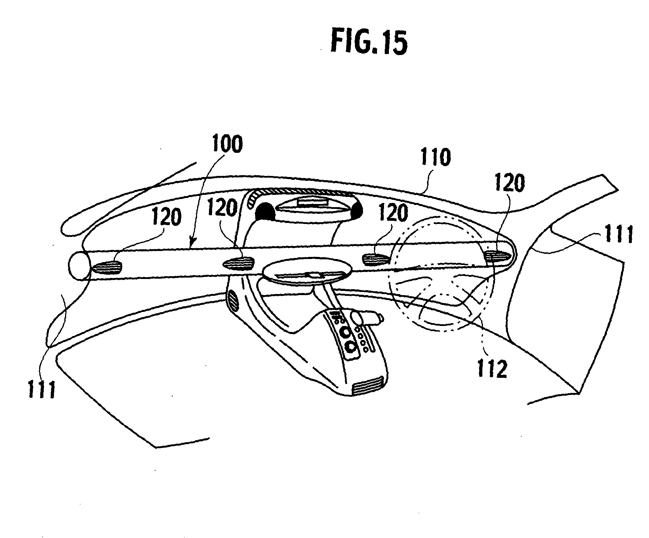

With reference to Fig. 15, the cross car beam 100 extends between both side walls 111. In this extending state, both ends of the cross car beam are fixed to both side walls 111 of the vehicle by bolts, welding, or the like and the cross car beam 100 stretches across the vehicle body 110 in the transverse direction. The cross car beam 100 reinforces the rigidity of the vehicle body 110 in the transverse direction. In addition, a shaft of a steering wheel 112 and an airbag are set in the vehicle body using the cross car beam 100.

The cross car beam 100 has a hollow tube. The intermediate portion of the hollow tube is connected to a duct extending from a vehicular air conditioning unit (not illustrated) to introduce conditioned air from the air conditioning unit. The surface of the cross car beam 100 closer to the passenger room includes a plurality of outlets 120 for adjusting the temperature of air sent to a passenger on a driver's seat or on a passenger seat. Conditioned air from the air conditioning unit is blown out from the outlets 120.

According to this structure, the tubular cross car beam 100 has the outlets for blowing out conditioned air, and the strength of the cross car beam 100 is deteriorated. Thus, the cross car beam 100 does not sufficiently reinforce the rigidity of the vehicle body in the transverse direction that is an original purpose of the cross car beam. If the thickness of the cross car beam is increased to enhance the strength, the cross car beam increases in weight, being not suitable for use in a vehicle.

In this structure, the cross car beam 100 includes a hollow tube, and the outlets 120 are provided in the hollow tube to blow conditioned air. This structure is difficult to control the blowing direction of the conditioned air. To control the conditioned air, it is necessary to optimally set conditions such as opening positions and opening angles of the outlets. Such setting causes a complicated structure, so that the manufacture of the cross car beam is troublesome, difficult, and impractical.

Accordingly, a duct member for controlling the conditioned air is incorporated in the cross car beam. This structure, however, causes a complicated operation for assembling the duct member into the cross car beam and an operation for making the duct member as a passage for conditioned air, and increases the assembling steps.

The first object of the invention is to provide an airflow distribution structure of a vehicular air conditioning system that sufficiently reinforces rigidity of a vehicle body in the transverse direction without deteriorating the strength even if a cross car beam is formed with outlets for conditioned air so that the cross car beam is used as a duct for conditioned air from an air conditioning system.

The second object of the invention is to provide an airflow distribution structure of a vehicular air conditioning system in which, if a cross car beam is used as a duct for conditioned air, a duct member for controlling the blowing out of conditioned air is simply incorporated in the cross car beam, and the operability thereof is enhanced.

### SUMMARY OF THE INVENTION

An aspect of the invention provides the following airflow distribution structure of a vehicular air conditioning system. The airflow distribution structure includes a tubular strength member (1; 40) extending behind an instrument panel (30) in a width direction of a vehicle and having both ends fixed to opposite side walls inside a passenger room, respectively. The strength member includes a first portion (13; 14) having an airflow passage (13; 14) therein. The strength member includes a second portion (19; 20) having a first outlet (15; 16) communicating with the airflow passage. The second portion (19; 20) is enlarged to be greater in tube dimension than the first portion (13; 14).

The airflow distribution structure further includes a duct member (22; 23; 24) inside the strength member (1; 40), having the airflow passage (13; 14) therein and communicating with the first outlet (15; 16). The duct member includes a curved portion coinciding with the first outlet, the curved portion (23b; 24b) curving away from the first outlet to curve close to the first outlet.

The first outlet includes first outlets (15; 16; 17; 18) in a longitudinal direction of the strength member. The second portion includes therein louvers (51; 52) switchable between the first outlets.

The strength member (1; 40) has a first inlet (8; 9) communicating with the airflow passage (13; 14). The strength member has an end opening (17; 18) at the end thereof. The airflow distribution structure includes an airflow distribution duct having a second inlet (22f; 22g) facing the first inlet. The airflow distribution structure includes a fitting opening (22d; 22e) closer to outlet. The airflow distribution structure includes a branch duct (23; 24) having a connecting opening (23d; 24d) closer to inlet and fittable with the fitting opening; and a second outlet (23c; 24c) facing the first outlet (15; 16). The airflow distribution duct (22) is inserted into the strength member (1; 40) from the first outlet (8; 9). The branch duct (23; 24) is inserted into the strength member (1; 40) from the end opening (17; 18). The fitting opening (22d; 22e) and the connecting opening (23d; 24d) are fitted and communicate with each other.

According to the airflow distribution structure, the tubular strength member defines an airflow passage and an outlet for conditioned airflow from an air conditioning unit, being used as a duct for conditioned airflow from an air conditioner.

The second portion is greater in tube dimension than the first portion. This structure enhances the strength of the strength member, ensuring opening area of the first outlet. Thus, the strength member is not required to increase in thickness, being suited for mounting on a vehicle.

The airflow distribution duct and the branch duct are inserted in the tubular strength member, allowing for smooth control of conditioned airflow.

The strength member is formed with a passage for conditioned airflow by inserting the airflow duct and the branch duct into the strength member and by fitting and connecting the fitting connecting opening of the airflow distribution duct and the connecting opening of the branch duct with each other. This achieves a simple assembling operation and enhances the operability

### BRIEF DESCRIPTION OF THE ACCOMPANYING DRAWINGS

Fig. 1 is a perspective view of a cross car beam according to a first embodiment;
Fig. 2 is a cross section of the cross car beam illustrated in Fig. 1;
Fig. 3 is a cross section illustrating a connecting structure of the cross car beam and a side vent duct;
Figs. 4A and 4B are respectively a front view and a cross section of an enlarged pipe portion illustrated in Fig. 1;
Figs. 5A and 5B are respectively a front view and a cross section of a cross car beam having no enlarged pipe portion;
Fig. 6 is a cross section of an airflow duct and the cross car beam before the airflow duct is inserted;
Fig. 7 is a cross section of the cross car beam in which the airflow duct is inserted;
Fig. 8 is a cross section of a side beam in which one of branch ducts is inserted;
Fig. 9 is a cross section of the side beam in which one of the branch ducts is inserted;
Fig. 10 is a cross section of the side beam in which the other branch duct is inserted;
Fig. 11 is a cross section of the side beam in which the other branch duct is inserted;
Fig. 12 is a perspective view of a cross car beam according to a second embodiment;
Fig. 13 is a cross section of the cross car beam illustrated in Fig. 12;
Fig. 14 is a perspective view illustrating a connecting structure between a rear duct and the cross car beam illustrated in Fig. 12; and
Fig. 15 is perspective view of a related airflow distribution structure.

### DETAILED DESCRIPTION OF THE PREFERRED EMBODIMENTS

The invention will be specifically described according to illustrated embodiments below. In the embodiments, like parts are designated with like reference numerals.

### First Embodiment

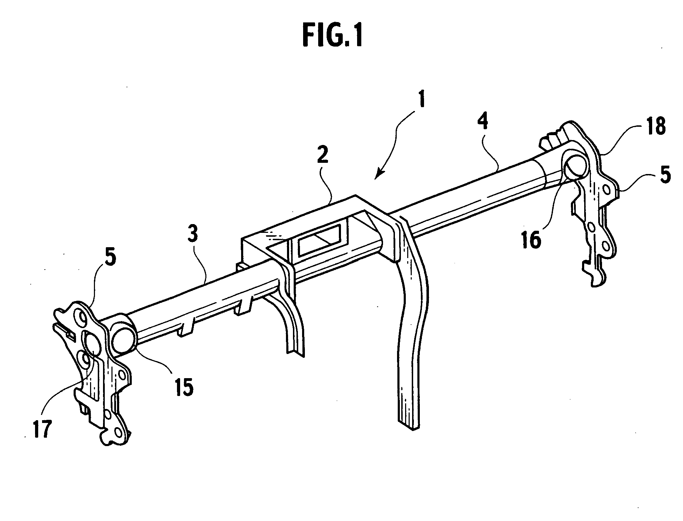

As illustrated in Fig. 1, a cross car beam 1 as a strength member extends in the widthwise direction of a vehicle. The cross car beam 1 includes a center block 2 at the longitudinally central portion. The cross car beam 1 includes a pair of side beams 3 and 4 respectively extending in the widthwise direction of the vehicle from the opposite ends of the center block 2. The entire cross car beam 1 is made of metal.

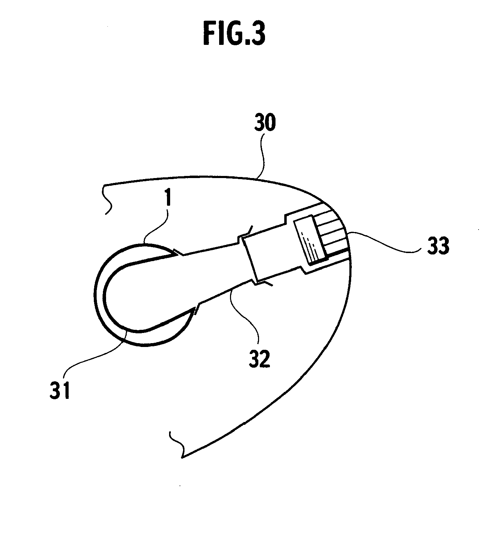

The cross car beam 1 is disposed behind an instrument panel 30 (see Fig. 3) provided in the front side of a passenger room, and extends in the widthwise direction of the vehicle body. The cross car beam 1 includes mounting brackets 5 at the longitudinally opposite ends (extended ends of the side beams 3 and 4). The mounting brackets 5 are fixed to the opposite side walls of the vehicle body by screws or the like. With this configuration, the cross car beam 1 reinforces the rigidity of the vehicle body in the transverse direction. This layout is also used for mounting the cross car beam 1 on a steering shaft or an airbag (not illustrated).

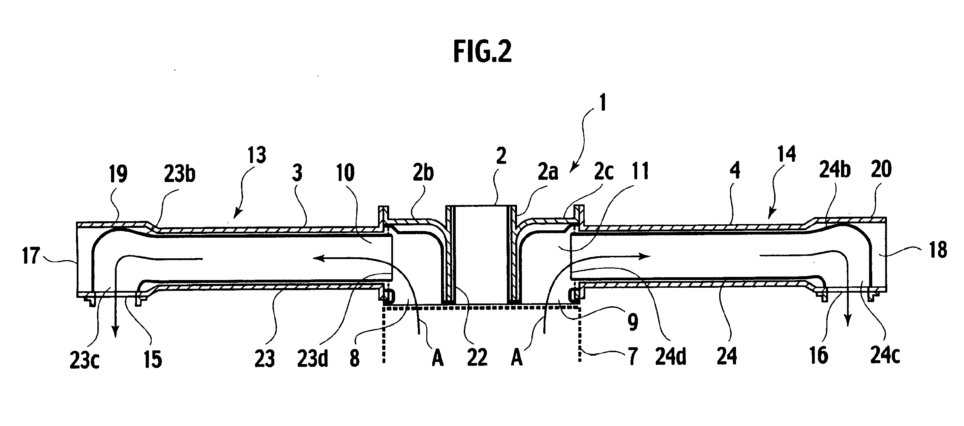

As illustrated in Fig. 2, the cross car beam 1 is formed by integrally joining hollow pipes by welding or the like. With this arrangement, the entire cross car beam 1 has the hollow pipes. The cross car beam 1 includes the center block 2 at the central portion. The center block 2 includes a hollow center pipe member 2a through the center block 2 in the vertical direction. The center block 2 is integrally provided at the opposite sides with side members 2b and 2c in the transverse direction. The side beams 3 and 4 include hollow pipes extending from the side members 2b and 2c in the transverse direction.

An air conditioning unit 7 that conditions the air inside a vehicle is disposed behind the instrument panel, coinciding with the center block 2, and supplies conditioned air A to the center block 2.

The side members 2b and 2c of the center block 2 is opened at the ends proximate to the air conditioning unit 7, forming inlets 8 and 9 through which air A from the air conditioning unit 7 is introduced. The side members 2b and 2c are opened at the connecting portion with the side beams 3 and 4, forming connecting openings 10 and 11 between the side beams 3 and 4. The side beams 3 and 4 are connected to the center block 2, with the side beams 3 and 4 facing the connecting openings 10 and 11. This connection brings the side members 2b and 2c and the side beams 3 and 4 into communication with each other, forming airflow passages 13 and 14 into which conditioned air A from the air conditioning unit 7 flows.

The hollow center pipe member 2a in the center block 2 permits conditioned air A from the air conditioning unit 7 to be introduced into the center member 2a. The center member 2a is connected to a defroster duct (not illustrated), and conditioned air A introduced into the center member 2a is blown out toward the lower side of a front panel of the vehicle body through the defroster duct.

The side beams 3 and 4 have extended ends, as open ends 17 and 18, in the longitudinal direction. The side beams 3 and 4 have side surfaces that are adjacent to the open ends 17 and 18. The side surfaces of the open ends 17 and 18 have side outlets 15 and 16 open to blow out air. The side outlets 15 and 16 are connected to a front side vent duct 31. This connection permits conditioned air A from the air conditioning unit 7 to be distributed toward the driver's seat and the passenger seat.

The side outlets 15 and 16 and the front side vent duct 31 are connected to each other by inserting the end of the front side vent duct 31 into the side beams 3 and 4 from the side outlets 15 and 16 and mounting a joint duct 32 on the side outlets 15 and 16. The joint duct 32 is connected to a side vent grill 33 of the instrument panel 30. This connection permits the conditioned air from the air conditioning unit 7 to blow out from a side vent grill 33.

In this embodiment, the tube dimensions of the side outlet 15 and 16 portions or second portions in the side beams 3 and 4 are greater than tube dimensions of the airflow passage 13 and 14 portions or first portions located upstream of the side outlet 15 and 16 portions. Therefore, the side outlet 15 and 16 portions have enlarged tube portions 19 and 20 as second portions having larger tube dimensions. Formation of the enlarged tube portions 19 and 20 to the side outlet 15 and 16 portions in this manner reduces opening ratios of the side outlets 15 and 16 in the side beams 3 and 4. This structure enhances the strength of the side beams 3 and 4, i.e., strength of the cross car beam 1, ensuring the opening areas of the side outlets 15 and 16. Thus, the cross car beam 1 is not required to increase in thickness for improvement in the strength, and thus the cross car beam 1 does not increase in weight, being suitably used in a vehicle.

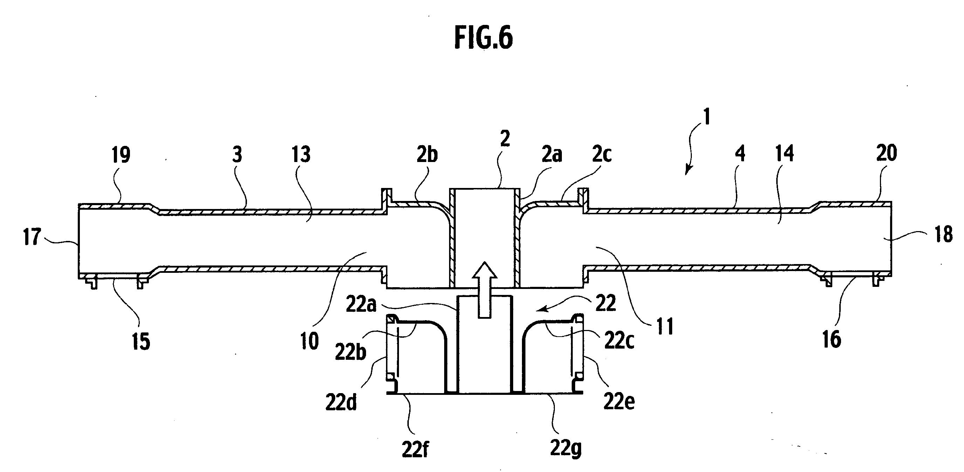

In this embodiment, the duct member is inserted in the cross car beam 1. The duct member forms a passage for the conditioned air A from the air conditioning u nit 7 in the cross car beam 1. As illustrated in Fig. 6, the duct member includes an airflow duct 22 to be inserted into the center block 2. The duct member includes branch ducts 23 and 24 that are inserted into the side beams 3 and 4, respectively.

The airflow duct 22 has a shape similar to that of the center block 2. That is, the airflow duct 22 includes a cylindrical portion 22a corresponding to the center member 2a of the center block 2. The airflow duct 22 includes cylindrical connecting portions 22b and 22c corresponding to the side members 2b and 2c. The cylindrical portion 22a and the connecting portions 22b and 22c are integrally formed. The connecting portions 22b and 22c are provided, at their ends closer to inlets, with inlets 22f and 22g facing the inlets 8 and 9. The connecting portions 22b and 22c are provided, at their ends closer to outlets, with fitting openings 22d and 22e corresponding to the connecting openings 10 and 11 of the side members 2b and 2c. The fitting openings 22d and 22e are open toward the side outlets 15 and 16 in the connecting portions 22b and 22c. The later-described ends of the branch ducts 23 and 24 closer to inlets are inserted and fitted into the fitting openings 22d and 22e.

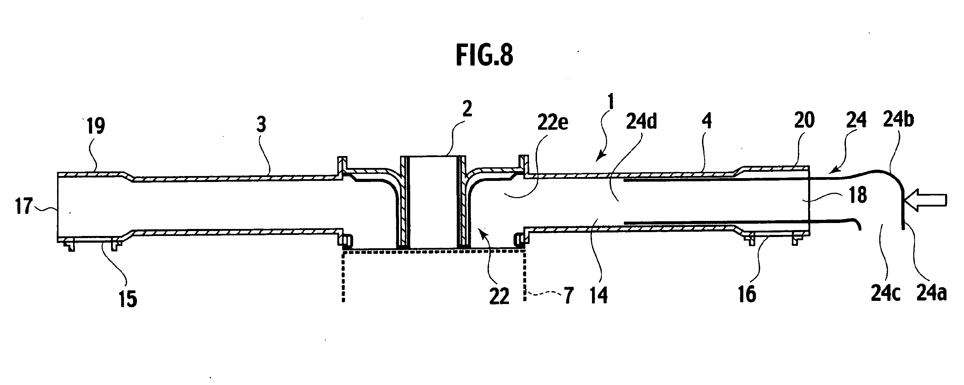

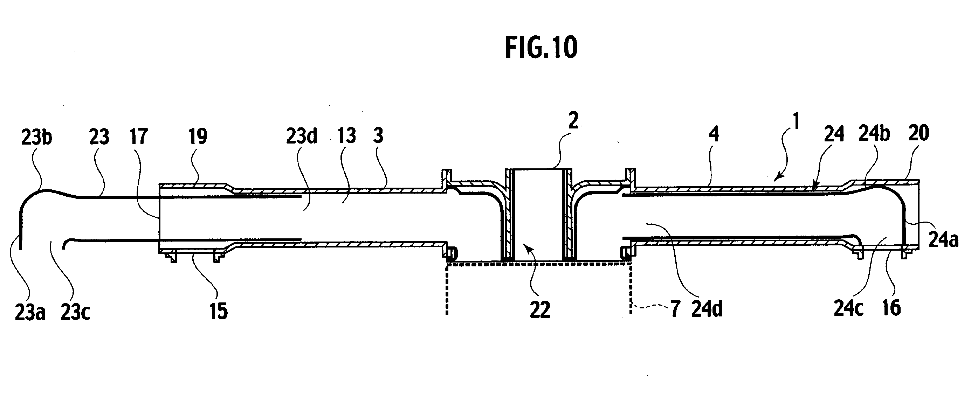

The branch ducts 23 and 24 are inserted into the side beams 3 and 4, respectively. As illustrated in Figs. 8 and 10, the branch ducts 23 and 24 have cylindrical shapes having outer dimensions substantially identical to the inner dimensions of the airflow passages 13 and 14 portions of the side beams 3 and 4. The branch ducts 23 and 24 have lengths substantially identical to those of the side beams 3 and 4, respectively.

The branch ducts 23 and 24 have portions corresponding to the side outlets 15 and 16. These portions are bent perpendicularly toward the side outlets 15 and 16, and serve as bent portions 23a and 24a. The ends of the bent portions 23a and 24a, i.e., ends closer to the outlet have outlets 23c and 24c facing the outlets 15 and 16. The outlets 23c and 24c abut against the side outlets 15 and 16, and the branch ducts 23 and 24 introduce the conditioned air A to the side outlets 15 and 16. The ends of the branch ducts 23 and 24 opposite from the bent portions 23a and 24a, i.e., ends closer to the inlet have connecting openings 23d and 24d. The connecting openings 23d and 24d are fitted to the fitting openings 22d and 22e of the connecting portions 22b and 22c, and the airflow duct 22 and the branch ducts 23 and 24 connect to and communicate with each other.

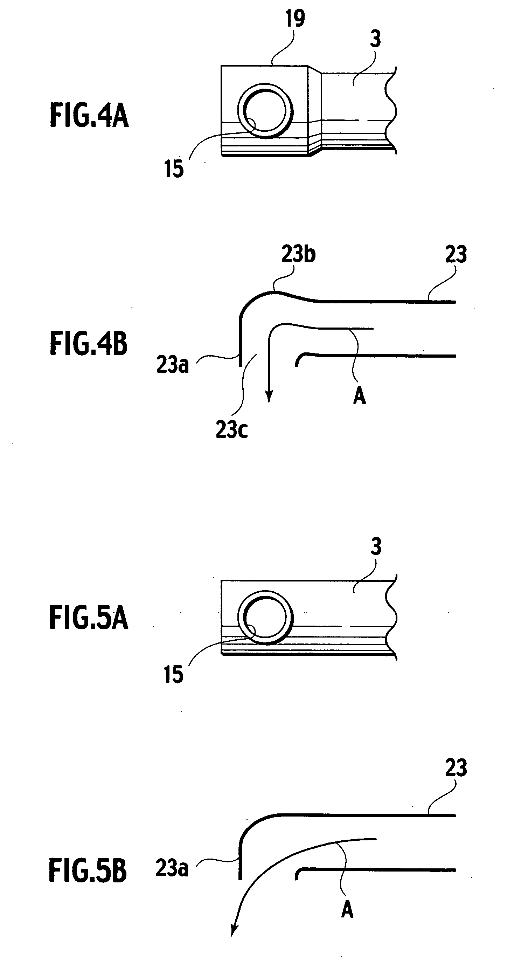

As illustrated in Figs. 8 and 10, starting ends of the bent portions 23a and 24a include curved portions 23b and 24b. The curved portions 23b and 24b are curved in a direction separating away from the respective side outlets 15 and 16. By curving the curved portions 23b and 24b in the direction separating away from the respective side outlets 15 and 16, conditioned air A from the air conditioning unit 7 temporarily pools at the curved portions 23b and 24b as illustrated in Figs. 4A and 4B. The pooled and conditioned air A then flows along the bent portions 23a and 24a and is blown out from the side outlets 15 and 16.

By forming the curved portions 23b and 24b into the bent portions 23a and 24a, the conditioned air A is controlled to blow out from the side outlets 15 and 16 along the substantially right-angled bent portions 23a and 24a, thus ensuring straight blowing of the conditioned air A. Thus, conditioned air from the side vent is reliably sent toward the driver's seat or the passenger seat, achieving efficient air conditioning operation. The side outlets 15 and 16 port-ions are enlarged in tube dimension, allowing the curved portions 23b and 24b to be smoothly inserted into the side outlets 15 and 16.

Figs. 5A and 5B illustrate a flow of conditioned air in the bent portions 23a and 24a if the curved portions 23b and 24b are not provided. This structure does not ensure straight blowing of the conditioned air.

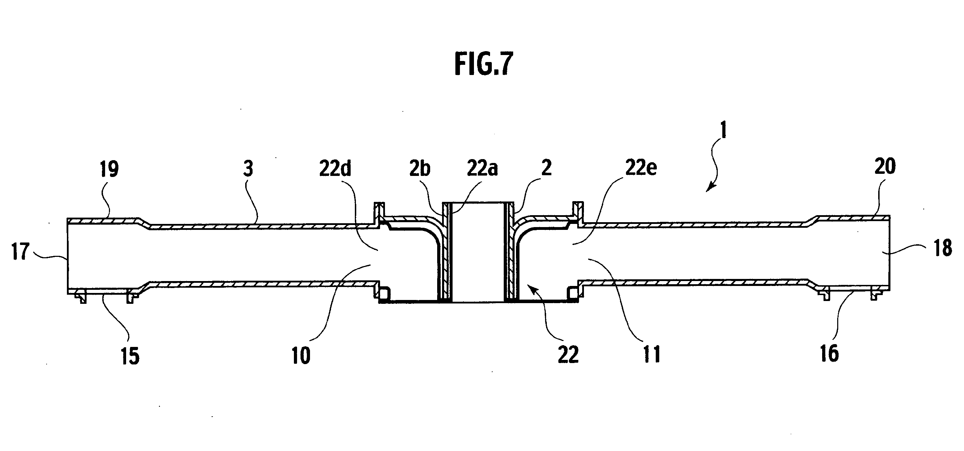

Figs. 6 to 11 illustrate steps for assembling the airflow duct 22 and the branch ducts 23 and 24 into the cross car beam 1. First, as illustrated in Fig. 6, the cylindrical portion 22a and the connecting portions 22b and 22c are set such that the cylindrical portion 22a faces the center member 2a, and the connecting portions 22b and 22c face the side members 2b and 2c. As illustrated in Fig. 7, the airflow duct 22 is inserted into the center block 2. By inserting the airflow duct 22, the fitting openings 22d and 22e of the airflow duct 22 are located at positions coinciding with the connecting openings 10 and 11 of the center block 2.

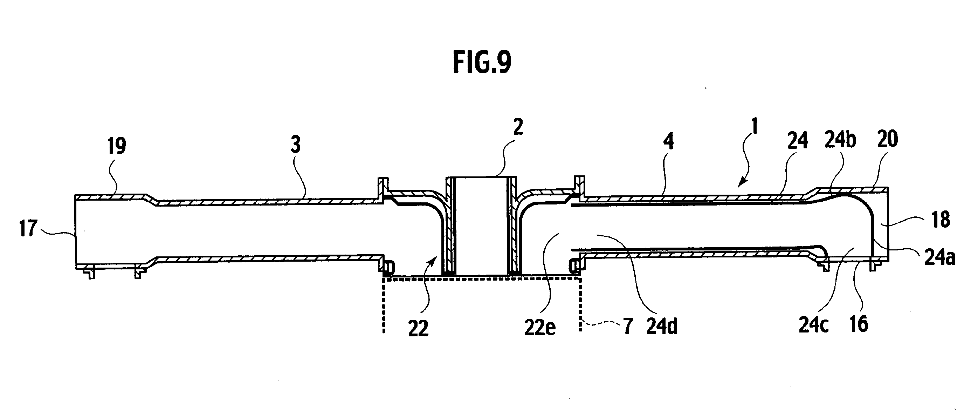

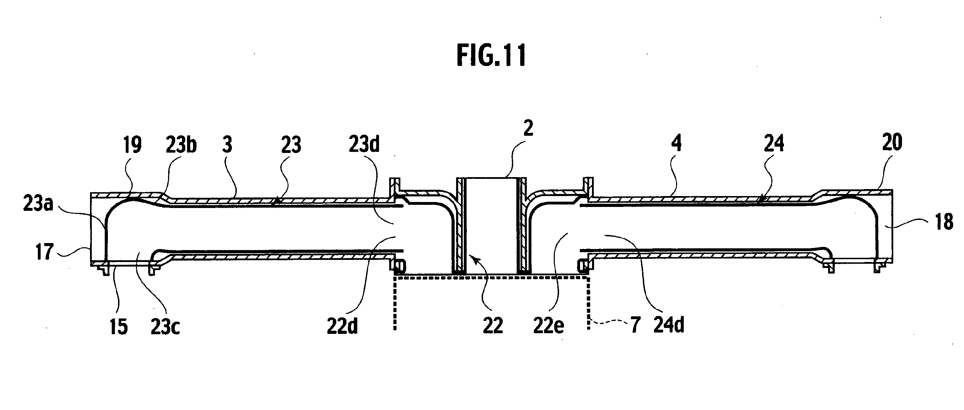

Next, the branch ducts 23 and 24 are inserted into the corresponding side beams 3 and 4. Figs. 8 and 9 illustrate a step of inserting the branch duct 24 into the side beam 4. Figs. 10 and 11 illustrate a subsequent step of inserting the branch duct 23 into the side beam 3.

The branch ducts 23 and 24 are inserted into the side beams 3 and 4 from the sides of the connecting openings 23d and 24d. The branch ducts 23 and 24 are inserted into the side beams 3 and 4 until the bent portions 23a and 24a abut against the corresponding side outlets 15 and 16 after they are inserted from the open ends 17 and 18 of the side beams 3 and 4. During such insertion, the side outlets 15 and 16 portions are formed with the enlarged tube portions 19 and 20 and their tube dimensions are increased. The bent portions 23a and 24a are smoothly inserted until they abut against the side outlets 15 and 16.

With this insertion, the branch ducts 23 and 24 permit the connecting openings 23d and 24d that are ends on the insertion side to be fitted into the fitting openings 22d and 22e of the airflow duct 22 already inserted into the center block 2. With this fitting, the insides of the connecting portions 22b and 22c of the airflow duct 22 and the insides of the branch ducts 23 and 24 are brought into communication with each other. Thus, the airflow duct 22 and the branch ducts 23 and 24 function as passages of the conditioned air A from the air conditioning unit 7, introducing the conditioned air A from the air conditioning unit 7 into the side outlets 15 and 16, allowing the conditioned air A to be blown out from the outlets 15 and 16.

In this assembling operation, the passage of the conditioned air A has a double structure including an outer side center block 2 and side beams 3 and 4, and an inner side airflow duct 22 and branch ducts 23 and 24. This double structure achieves the passage free from leakage of conditioned air A. Even if the double structure is complicated, the assembling operation is carried out by inserting the airflow duct 22 into the center block 2 and by inserting the branch ducts 23 and 24 into the side beams 3 and 4. This method achieves a simple assembling and enhances the assembling workability.

The branch ducts 23 and 24 may be inserted into the side beams 3 and 4 such that the branch duct 23 is first inserted into the side beam 3 and then, the branch duct 24 is inserted into the side beam 4.

### Second Embodiment

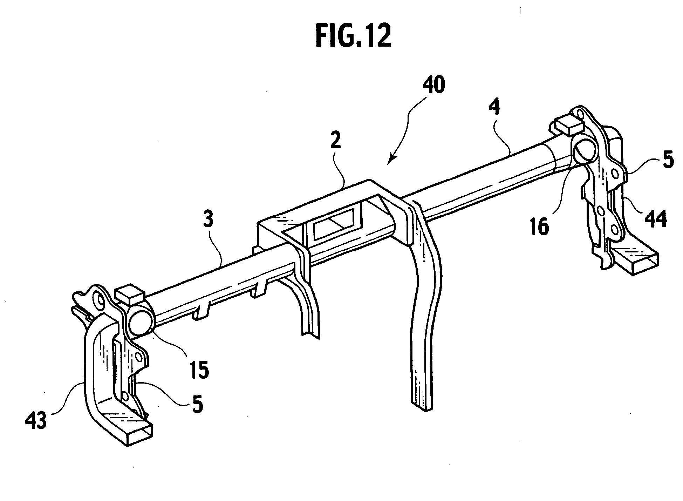

With reference to Figs. 12 to 14, a cross car beam 40 according to a second embodiment also includes the substantially central center block 2, and the side beams 3 and 4 extending from the left and right ends of the center block 2 in the widthwise direction of the vehicle. Like the first embodiment, the center block 2 has the duct member inserted therein. The duct member includes the airflow duct 22 and the branch ducts 23 and 24. The airflow duct 22 is inserted into the center block 2, the branch ducts 23 and 24 are inserted into the side beams 3 and 4, and the duct member is assembled to the cross car beam 40. This assembling operation may be carried out in the same manner as that of the first embodiment. Thus, in this embodiment also, the passage of the conditioned air is of the double structure, and the members are simply be assembled.

That is, the airflow duct 22 is inserted into the center block 2 from the inlets 8 and 9. The branch ducts 23 and 24 are inserted into the side beams 3 and 4. The connecting openings 23d and 24d are fitted into the fitting openings 22d and 22e of the airflow duct 22, and the airflow duct 22 and the branch ducts 23 and 24 are connected to each other. In this embodiment also, the passage of the conditioned air having the double structure simplifies assembling of the duct member including the airflow duct 22 and the branch ducts 23 and 24 into the cross car beam.

The side beams 3 and 4 have the side outlets 15 and 16 on the side of the open ends 17 and 18. The tube dimensions of the outlets 15 and 16 portions or enlarged tube portions 19 and 20 are greater than those of the airflow passage 13 and 14 portions. This structure ensures the strength of the cross car beam 40 without increasing the thickness, and restrains the weight of the cross car beam 40 from increasing.

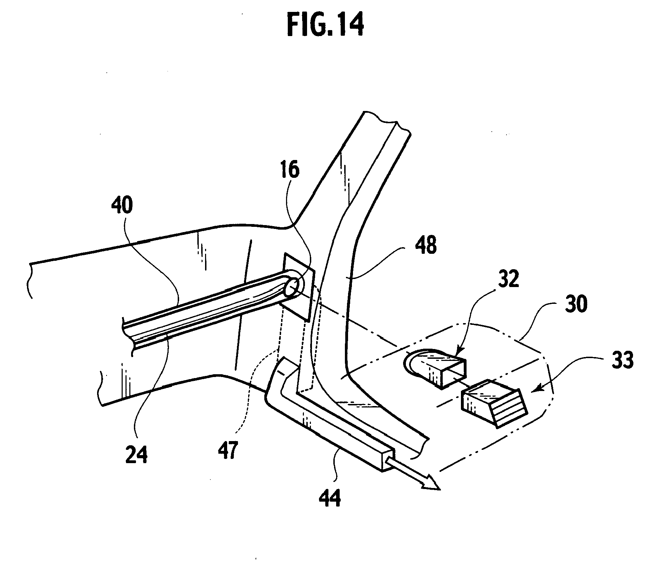

In this embodiment, the open ends 17 and 18 in the side beams 3 and 4 serve as rear outlets. The open ends 17 and 18 as the rear outlets are connected to the rear ducts 43 and 44 as illustrated in Figs. 12 and 14. With this connection, the ends of the branch ducts 23 and 24 to be inserted into the side beams 3 and 4 on the side of the side outlets 15 and 16 are open as rear connecting openings 45 and 46. The branch ducts 23 and 24 are inserted in the side beams 3 and 4 such that the rear connecting openings 45 and 46 are aligned with the open ends 17 and 18 of the side beams 3 and 4. The ends of the rear ducts 43 and 44 are respectively inserted and fitted between the rear connecting openings 45 and 46 and the open ends 17 and 18. With this arrangement, conditioned air A from the air conditioning unit 7 is introduced into the rear ducts 43 and 44 from the open ends 17 and 18 of the side beams 3 and 4, and is blown out from the rear ducts 43 and 44 toward the rear seat side.

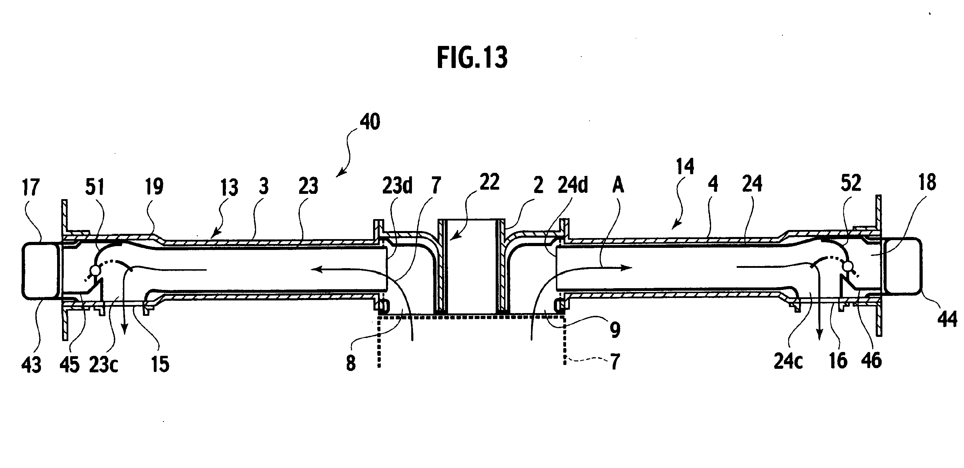

In Fig. 13, the open ends 17 and 18 of the side beams 3 and 4 and the rear ducts 43 and 44 are connected to each other using joint ducts 47. The joint duct 47 connects the open ends 17 and 18 and the rear ducts 43 and 44 with each other, with the joint duct 47 disposed in a side pillar 48 of the vehicle body. The rear ducts 43 and 44 extend downward along the mounting bracket 5 (see Fig. 12).

In this embodiment, as illustrated in Fig. 13, the side outlets 15 and 16 and the open ends 17 and 18 as the rear outlets have doors 51 and 52 or louvers for switching the conditioned air A therebetween. The doors 51 and 52 are rotatably disposed in the enlarged tube portions 19 and 20 in the side beams 3 and 4. The doors 51 and 52 are rotated to switch between the side outlets 15 and 16 and the open ends 17 and 18.

The doors 51 and 52 are disposed in corresponding portions between the enlarged tube portions 19 and 20 in the branch ducts 23 and 24 inserted into the side beams 3 and 4. The door 51 is curved from the open ends 17 and 18 toward the airflow passages 13 and 14. This curved shape guides the conditioned air A to smoothly flow into the side outlets 15 and 16, thus reliably supplying conditioned air A to the side outlets 15 and 16. The doors 51 and 52 provided in the enlarged tube portions 19 and 20 do not narrow the airflow passage, thus to open or close the airflow passage without deteriorating the airflow supply resistance.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

## Claims

1. An airflow distribution structure of a vehicular air conditioning system, comprising:
a tubular strength member extending behind an instrument panel in a width direction of a vehicle and having both ends fixed to opposite side walls inside a passenger room, respectively,
wherein the strength member comprises:
a first portion having an airflow passage therein; and
a second portion having a first outlet communicating with the airflow passage,
wherein the second portion is enlarged to be greater in tube dimension than the first portion.

2. The airflow distribution structure according to claim 1, further comprising:
a duct member inside the strength member, having the airflow passage therein and communicating with the first outlet,
wherein the duct member comprises a curved portion coinciding with the first outlet, the curved portion curving away from the first outlet to curve close to the first outlet.

3. The airflow distribution structure according to claim 1,
wherein the first outlet comprises first outlets in a longitudinal direction of the strength member,
wherein the second portion comprises therein louvers switchable between the first outlets.

4. The airflow distribution structure according to claim 1,
wherein the strength member has a first inlet communicating with the airflow passage,
wherein the strength member has an end opening at the end thereof,
the airflow distribution structure further comprises:
an airflow distribution duct having a second inlet facing the first inlet; and a fitting opening closer to outlet; and
a branch duct having a connecting opening closer to inlet and fittable with the fitting opening; and a second outlet facing the first outlet,
wherein the airflow distribution duct is inserted into the strength member from the first outlet,
wherein the branch duct is inserted into the strength member from the end opening,
wherein the fitting opening and the connecting opening are fitted and communicate with each other.
